Europäisches Patentamt

European Patent Office

Office européen des brevets

(11) Veröffentlichungsnummer: **0 384 207**
**A2**

## (12) EUROPÄISCHE PATENTANMELDUNG

(21) Anmeldenummer: 90102281.4

(22) Anmeldetag: 06.02.90

(51) Int. Cl.⁵: **H04J 3/06**

(30) Priorität: 23.02.89 DE 3905594

(43) Veröffentlichungstag der Anmeldung:
**29.08.90 Patentblatt 90/35**

(84) Benannte Vertragsstaaten:
**AT BE CH DE DK ES FR GB GR IT LI NL SE**

(71) Anmelder: **Standard Elektrik Lorenz
Aktiengesellschaft
Lorenzstrasse 10
D-7000 Stuttgart 40(DE)**

(84) **DE**

Anmelder: **ALCATEL N.V.
Strawinskylaan 341 (World Trade Center)
NL-1077 XX Amsterdam(NL)**

(84) **BE CH DK ES FR GB GR IT LI NL SE AT**

(72) Erfinder: **Hornberger, Thomas
Bittenfelder Strasse 11
D-7148 Remseck 4(DE)**

(74) Vertreter: **Graf, Georg Hugo, Dipl.-Ing. et al
Standard Elektrik Lorenz AG Patent- und
Lizenzwesen Postfach 30 09 29
D-7000 Stuttgart 30(DE)**

(54) Verfahren zum Zuordnen von Digitalsignalen auf parallele Empfangskanäle.

(57) Wenn ein Demultiplexer durch Auflösen eines Zeitmultiplex-Digitalsignals wieder die ursprünglichen Digitalsignale bereitstellt, entsteht das Problem, diese auf die richtigen Empfangskanäle (E1 bis E4) zuzuordnen.

Erfindungsgemäß wird mindestens ein Digitalsignal in einem Kanalverteiler (1) mittels eines Registers (15) verzögert, und die Digitalsignale werden mittels zyklisch arbeitender Wählschalter (11 bis 14) in Zeitabständen von vorzugsweise zwei Pulsrahmen, die ein Rahmenzähler (4) erzeugt, so lange auf die Empfangskanäle (E1 bis E4) vertauscht, bis in einer Schaltung (2) zur Erkennung des Rahmenkennungswortes das Rahmenkennungswort erkannt wird. Dann synchronisiert ein Synchronisierer (3) den Rahmenzähler (4) auf den Pulsrahmen des Demultiplexers und wird gleichzeitig das zyklische Vertauschen beendet.

Die Erfindung bezieht sich auf Digitalsignale, die durch bitweises oder wortweises Auflösen eines Zeitmultiplex-Digitalsignals entstanden sind.

FIG.1

EP 0 384 207 A2

## Verfahren zum Zuordnen von Digitalsignalen auf parallele Empfangskanäle

Die Erfindung betrifft ein Verfahren nach dem Oberbegriff des Patentanspruchs 1.

Es gibt Verfahren für die digitale Nachrichtenübertragung, in denen sendeseitig Digitalsignale aus verschiedenen Kanälen wortweise oder bitweise zu einem Zeitmultiplexsignal zusammengefaßt werden. Dabei kann jedes Digitalsignal selbst schon ein Zeitmultiplexsignal sein, das dann mit anderen solchen Digitalsignalen zu einem Zeitmultiplex-Digitalsignal höherer Ordnung zusammengefaßt wird. So werden z.B. vier Digitalsignale mit einer Bitfolgefrequenz von 140 Mbit/s zu einem Zeitmultiplex-Digitalsignal mit einer Bitfolgefrequenz von 565 Mbit/s zusammengefaßt.

Wenn ein Demultiplexer durch Auflösen dieses Zeitmultiplex-Digitalsignals wieder die ursprünglichen Digitalsignale bereitstellt, müssen diese auf den richtigen Empfangskanälen parallel verteilt werden. Die Verteilung durch den Demultiplexer ist zufällig. Es gibt soviele Möglichkeiten, wie es Digitalsignale gibt, bei vier Digitalsignalen also vier Möglichkeiten.

Zur Herstellung der richtigen Zuordnung dient ein Verfahren nach dem Oberbegriff des Patentanspruchs 1.

Aus der "Nachrichtentechnischen Zeitschrift", (ntz), S. 16 ff., 36 (1983), ist ein solches Verfahren bekannt.

Einer Anordnung zur Durchführung dieses Verfahrens werden ein Taktsignal und über vier parallele Kanäle vier Digitalsignale zugeführt, wobei die Digitalsignale, aus einem Demultiplexer kommend, synchronisiert werden und zu einem Kanalverteiler gelangen.

Die vier Digitalsignale werden außerdem einer Schaltung zur Erkennung des Rahmenkennungswortes des Zeitmultiplex-Digitalsignals zugeführt, die aufgrund des Beginns des Rahmenkennungswortes einen Rahmenzähler synchronisiert.

Einzelheiten zu den in der Schrift gezeigten Baugruppen sind nicht erwähnt.

Es ist die Aufgabe der Erfindung, ein Verfahren der eingangs genannten Art zu schaffen, das mit anderen als den bekannten Mitteln die Zuordnung der Digitalsignale auf Empfangskanäle erreicht.

Die Aufgabe wird gelöst, wie in Patentanspruch 1 angegeben. Weiterbildungen ergeben sich aus den Unteransprüchen.

Die Erfindung wird anhand der Figuren beispielsweise erläutert. Es zeigen:

Fig. 1 ein Schaltbild einer erfindungsgemäßen Vorrichtung, bestehend aus einem Kanalverteiler, einem Rahmenzähler, einer Schaltung zur Erkennung des Rahmenkennungswortes und einem Synchronisierer;

Fig. 2 ein Impulsdiagramm, das die Wirkungsweise des Rahmenzählers erläutert.

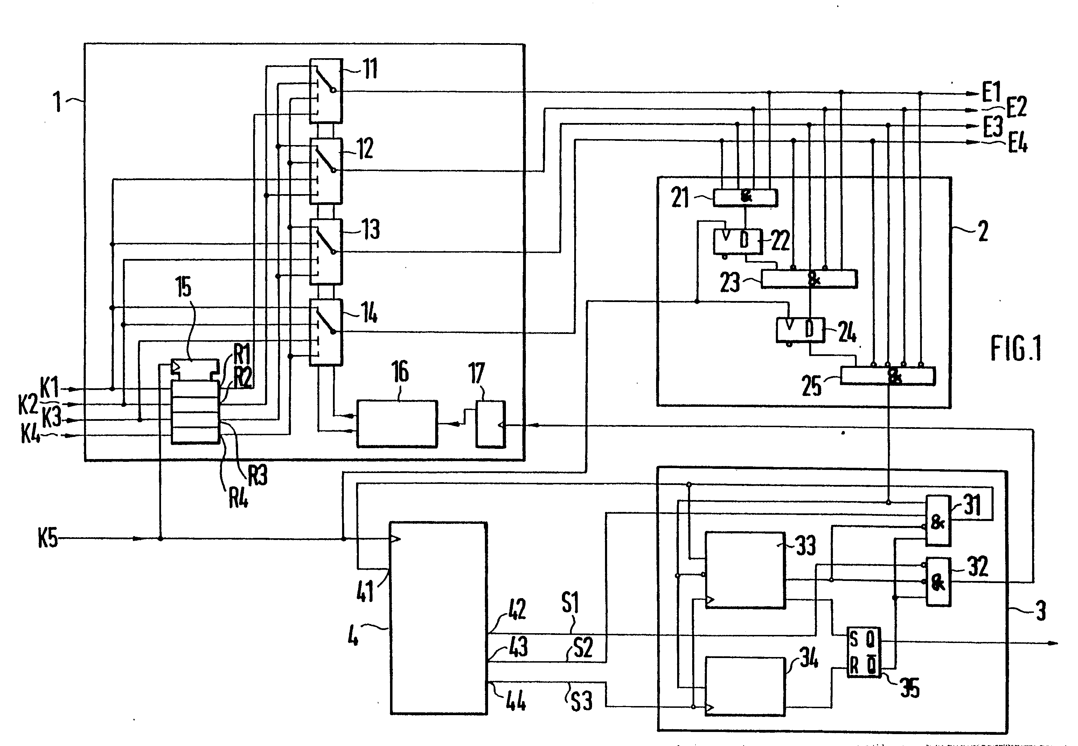

Fig. 1 zeigt einen Kanalverteiler 1, der ein Register 15, einen Zähler 16, einen Teiler 17 und vier Wählschalter 11 bis 14 enthält.

Als Wählschalter werden die Schalter 11 bis 14 deshalb bezeichnet, weil sie wahlweise einen von mehreren Eingängen mit ihrem Ausgang verbinden.

Im vorliegenden Fall schalten sie zyklisch. Dem Kanalverteiler 1 werden von einem Demultiplexer (der nicht Teil der Erfindung und in Fig. 1 nicht dargestellt ist) vier Digitalsignale 1, 2, 3, 4 über vier einzelne Kanäle K1 bis K4 und gesondert über einen Kanal K5 ein Taktsignal zugeführt, wobei dieses die gleiche Bitfolgefrequenz wie die Digitalsignale 1 bis 4 hat.

Da die Aufteilung der Digitalsignale auf die Kanäle K1 bis K4 rein zufällig ist, ergeben sich duch zyklische Vertauschung vier Zuordnungen A, B, C, D der Digitalsignale 1 bis 4 auf die Kanäle K1 bis K4, dargestellt in Diagramm 1.

Diagramm 1

| | Zuordnungen | | | |
|---|---|---|---|---|
| Digitalsignale | A | B | C | D |
| 1 | K1 | K4 | K3 | K2 |
| 2 | K2 | K1 | K4 | K3 |
| 3 | K3 | K2 | K1 | K4 |
| 4 | K4 | K3 | K2 | K1 |

Entsprechend enthalten die Digitalsignale 1 bis 4 bei einem bitweise aufgelösten Zeitmultiplexsignal ein jeweils viertes Bit in zyklischer Folge. Die Anzahl der Bits des Rahmenkennungsworts ist in diesem Fall bei einer Bitfolgefrequenz von 565 Mbit/s als ganzzahliges Vielfaches der Anzahl der Digitalsignale gewählt.

Nach den CCITT-Empfehlungen G.922 oder G.954 hat es die Bitsequenz 111110100000, von der entsprechend jedem Digitalsignal 1 bis 4 drei Bits zugeordnet werden, wobei nur die Zuordnung A, synchron zur Bitfolgefrequenz des Zeitmultiplexsignals, innerhalb von drei Bittakten der Bitfolgefrequenz der Digitalsignale 1 bis 4 erfolgt. Bei den anderen Zuordnungen B, C, D werden zeitgleich mit Bits aus dem Rahmenkennungswort beliebige andere Bits X in den Kanälen K1 bis K4 übertragen.

Dies ist in Diagramm 2 dargestellt.

Am Eingang des Kanalverteilers 1 sind daher während einer vier Bits 1, 2, 3, 4 entsprechenden Zeitdauer, in der Bits aus dem Rahmenkennungswort auftreten, folgende Kombinationen der Digitalsignale 1 bis 4 möglich:

Diagramm 2

| Bits | Zuordnungen | | | | | | | | | | | | | | | |
|---|---|---|---|---|---|---|---|---|---|---|---|---|---|---|---|---|
| | A | | | | B | | | | C | | | | D | | | |
| | 1 | 2 | 3 | 4 | 1 | 2 | 3 | 4 | 1 | 2 | 3 | 4 | 1 | 2 | 3 | 4 |
| Digitalsignale | | | | | | | | | | | | | | | | |
| 1 | 1 | 1 | 0 | X | X | 1 | 0 | 0 | X | 1 | 1 | 0 | X | 1 | 0 | 0 |
| 2 | 1 | 0 | 0 | X | X | 1 | 1 | 0 | X | 1 | 0 | 0 | 1 | 1 | 0 | X |
| 3 | 1 | 1 | 0 | X | X | 1 | 0 | 0 | 1 | 1 | 0 | X | 1 | 0 | 0 | X |
| 4 | 1 | 0 | 0 | X | 1 | 1 | 0 | X | 1 | 0 | 0 | X | 1 | 1 | 0 | X |

Die Digitalsignale 1 bis 4 werden über das durch das Taktsignal getaktete Register 15 mit Ausgängen R1 bis R4 um ein Bit verzögert; die Ausgänge R1 bis R4 sind der Reihe nach den Kanälen K1 bis K4 zugeordnet: an den Ausgängen R1 bis R4 liegen während der Folge von vier Bits 0, 1, 2, 3, - wobei das Bit 0 zeitlich dem Bit 1 vorausgeht - ,folgende, im Diagramm 3 gezeigte Kombinationen in den Digitalsignalen vor.

Zur Vereinfachung werden die Digitalsignale hier mit den Ausgängen R1 bis R4 bezeichnet, an denen sie auftreten.

Diagramm 3

| Bits | Zuordnungen | | | | | | | | | | | | | | | |
|---|---|---|---|---|---|---|---|---|---|---|---|---|---|---|---|---|
| | A | | | | B | | | | C | | | | D | | | |
| | 0 | 1 | 2 | 3 | 0 | 1 | 2 | 3 | 0 | 1 | 2 | 3 | 0 | 1 | 2 | 3 |
| Digitalsignale | | | | | | | | | | | | | | | | |
| R1 | X | 1 | 1 | 0 | X | X | 1 | 0 | X | X | 1 | 1 | X | X | 1 | 0 |
| R2 | X | 1 | 0 | 0 | X | X | 1 | 1 | X | X | 1 | 0 | X | 1 | 1 | 0 |
| R3 | X | 1 | 1 | 0 | X | X | 1 | 0 | X | 1 | 1 | 0 | X | 1 | 0 | 0 |
| R4 | X | 1 | 0 | 0 | X | 1 | 1 | 0 | X | 1 | 0 | 0 | X | 1 | 1 | 0 |

Die Kanäle K1, K2, K3 sind unmittelbar mit den Eingängen der Wählschalter 12 bis 14, die Kanäle K1 bis K4 sind mittelbar über das Register 15 mit den Eingängen der Wählschalter 11 bis 14 verbunden.

Die Wählschalter 11 bis 14 haben jeweils vier Eingänge, zwischen denen zyklisch mit der Periodizität von mindestens einem Pulsrahmen, vorzugsweise jedoch zwei, im allgemeinen m Pulsrahmen, wobei m eine natürliche Zahl ist, mittels des Zählers 16 geschaltet wird, und sind der Reihe nach über jeweils einen Ausgang mit jeweils einem Empfangskanal E1 bis E4 verbunden.

Zwischen den insgesamt 16 Eingängen der Wählschalter wird in vier Stellungen derart geschaltet, daß

3

aus jeder der eingangsseitigen Zuordnungen A bis D, wie sie die Digitalsignale, die auf den Kanälen K1, K2, K3 unverzögert, oder von den Ausgängen des Registers 15, R1 bis R4, kommend, um ein Bit verzögert, zusammen darstellen, ausgangsseitige Zuordnungen A', B', C', D' erzeugt werden, so daß innerhalb der Dauer einer zur Anzahl der zueinander parallelen Digitalsignale proportionalen Anzahl von Pulsrahmen die richtige ausgangsseitige Zuordnung A' durch eine mittels der Wählschalter 11-14 bewirkte Transformation A → A', B → A', C → A', D → A' mit Sicherheit erreicht wird, indem die Empfangskanäle E1 bis E4 gemäß Diagramm 4 bei den Zuordnungen A bis D auf die folgende Weise geschaltet werden:

Diagramm 4

|  | Richtige Transformationen | | | |
|---|---|---|---|---|
| Empfangskanäle | A → A' | B → A' | C → A' | D → A' |
| E1 | R1 | R4 | R3 | R2 |
| E2 | R2 | K1 | R4 | R3 |
| E3 | R3 | K2 | K1 | R4 |
| E4 | R4 | K3 | K2 | K1 |

Wenn der Teiler 16 die Wählschalter 11 bis 14 in diese Zuordnung A' geschaltet hat, in der auf den Empfangskanälen das Rahmenkennungswort innerhalb einer Zeitdauer von 3 Bits "synchron" auftritt, kann es mittels einer Schaltung 2 detektiert werden.

Allgemein enthält ein erfindungsgemäßer Kanalverteiler 1 bei n zueinander parallelen Digitalsignalen n Wählschalter, die in n Stellungen schalten, wobei n eine natürliche Zahl ist. Von den n Digitalsignalen werden dem Wählschalter n-1 verzögert und alle n unverzögert zugeführt.

Mittels der Wählschalter sind während einer Dauer von mindestens n Pulsrahmen, vorzugsweise jedoch 2n Pulsrahmen, n Transformationen möglich, unter denen eine mit Sicherheit die richtige ist, aufgrund deren in der Schaltung 2 das Rahmenkennungswort erkannt werden kann.

Die Schaltung 2 enthält drei UND-Gatter 21, 23, 25 und zwei durch das Taktsignal über Kanal K5 getaktete D-Flip-Flops 22, 24. Die vier nicht-invertierenden Eingänge des UND-Gatters 21 sind jeweils mit den Empfangskanälen E1 bis E4 verbunden. Die Bitkombination 1111, die als erste parallel in den Empfangskanälen auftritt, erzeugt ein "1"-Signal am Ausgang des UND-Gatters 21, das dem D-Flip-Flop 22 zugeführt und dort für die Zeitdauer eines Bits gespeichert wird. Das UND-Gatter 23 hat drei nicht-invertierende Eingänge, von denen einer mit dem Empfangskanal E1, ein zweiter mit dem Empfangskanal E3 und der dritte mit dem Ausgang des D-Flip-Flops 22 verbunden ist.

Von den beiden invertierenden Eingängen ist der eine mit dem Empfangskanal E2, der andere mit dem Empfangskanal E4 verbunden.

Sofern die Bitkombination 1010 sofort nach der Bitkombination auftritt, erzeugt das UND-Gatter 23 an seinem Ausgang ein "1"-Signal, das dem D-Flip-Flop 24 zugeführt und dort für die Zeitdauer eines Bits gespeichert wird. Dann gelangt es in das UND-Gatter 25 über dessen nicht-invertierenden Eingang. Das UND-Gatter 25 hat außerdem vier invertierende Eingänge, die jeweils mit den Empfangskanälen E1 bis E4 verbunden sind.

Wenn auf diesen die Bitkombination 0000 auf die Bitkombinationen 1111 und 1010 unmittelbar folgt, bildet das UND-Gatter 25 ein "1"-Signal, das "Rahmenkennungswort erkannt" bedeutet.

Allgemein enthält eine erfindungsgemäße Schaltung 2 zur Erkennung eines Rahmenkennungswortes Logikschaltungen wie UND-,ODER-,NOR- und NAND-Gatter sowie Verzögerungsregister, um zeitliche Folgen als ganze detektieren zu können.

Das "1"-Signal wird einem Synchronisierer 3 zugeführt, der wiederum durch einen Rahmenzähler 4 gesteuert wird.

Der Rahmenzähler 4 wird durch das Taktsignal über den Kanal K5 getaktet und erzeugt einen Pulsrahmen einer vorgegebenen Länge; bei einer Bitfolgefrequenz von 140 Mbit/s gemäß der CCITT-Empfehlung G. 922, einen Pulsrahmen der Länge 672 Bits, korrespondierend zu einem Pulsrahmen der gleichen Zeitdauer mit 2688 Bits im Zeitmultiplex-Digitalsignal.

Der vom Rahmenzähler 4 erzeugte Pulsrahmen ist, sobald der Rahmenzähler 4 zu arbeiten beginnt, in der Regel nicht synchron zum Pulsrahmen des Zeitmultiplex-Digitalsignals.

Der Rahmenzähler 4 hat daher einen Eingang 41, über den er bei Erreichen des Synchronismus durch den Synchronisierer 3 synchron zum Pulsrahmen des Zeitmultiplex-Digitalsignals gesetzt wird. Über seine Ausgänge 42 bis 44 gibt der Rahmenzähler 4 zu bestimmten Zeitpunkten innerhalb des von ihm erzeugten Pulsrahmens Signale S1 bis S3 an den Synchronisierer 3.

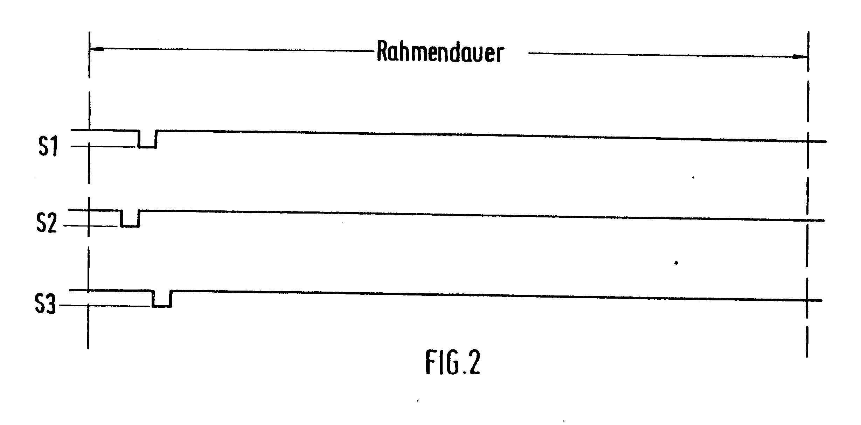

Die Wirkungsweise des Synchronisierers 3 und des Rahmenzählers 4 wird zusammen mit dem in Fig. 2 gezeigten Impulsdiagramm der Signale S1 bis S3 erläutert.

Sie haben während der meisten Zeit einen kontinuierlichen "1"-Zustand.

Der Synchronisierer 3 besteht aus zwei Zählern 33, 34, zwei UND-Gattern 31, 32 und einem RS-Flip-Flop 35.

Solange in dem Synchronisierer 3 kein Rahmenwort erkannt worden ist, taktet der Rahmenzähler 4 einmal während des von ihm erzeugten Rahmens mit dem Signal S3 den Teiler 17 des Kanalverteilers 1.

Der Teiler 17 schaltet nach vorzugsweise jedem zweiten Rahmen des Rahmenzählers 3 um und gibt dem Zähler 16 ein Signal, so daß dieser um 1 weiterzählt. Der Zähler 16 zählt aufwärts bis zu der Zahl, die der Anzahl der Kanäle (hier: 4) entspricht, beginnt also nach 8 Rahmendauern jeweils von vorn.

Auf diese Weise können an den Wählschaltern die 4 Zuordnungen A bis D in die Zuordnungen A′ bis D′ transformiert werden.

Der Teiler 17 schaltet deshalb nach jedem zweiten, vom Rahmenzähler 4 erzeugten Rahmen um, damit das Rahmenkennungswort in der Schaltung 2 auch dann noch mit Sicherheit erkannt werden kann, wenn es zu dem Zeitpunkt auftritt, an dem der Zähler 16 weiterzählt. Der Teiler 17 schaltet und der Zähler 16 zählt solange weiter, bis ein Rahmenkennungswort erkannt ist.

Wenn jedoch ein Rahmenkennungswort erkannt worden ist und durch dieses zusammen mit anderen Signalen das UND-Gatter 31 auf den Zustand "1" gesetzt worden ist, wird der Rahmenzähler 4 über seinen Eingang 41 synchron zum empfangenen Rahmen gesetzt.

Das Signal S3, das während der Dauer des vom Rahmenzähler 4 erzeugten Pulsrahmens, dem Signal S1 zeitlich vorausgehend, ebenfalls kurz den Zustand "0" annimmt, wird den Takteingängen der Zähler 33 und 34 zugeführt.

Wenn, während das Signal S3 den Zustand "0" annimmt, die Schaltung 2 das Signal "Rahmenkennungswort erkannt" abgibt, zählt der Zähler 33 um 1 aufwärts, der Zähler 34 wird auf Null gesetzt. Wenn aber kein Rahmenkennungswort detektiert worden ist, zählt hingegen der Zähler 34 um 1 aufwärts, und der Zähler 33 wird auf Null gesetzt.

Wenn der Zähler 33 den Zählerstand 3 erreicht hat, setzt er über seinen ersten Ausgang das RS-Flip-Flop 35. Dieses bleibt solange gesetzt, bis es nach viermaligem Nicht-Erkennen des Rahmenkennungswortes, aufgrund dessen der Zähler 34 bis 4 gezählt hat, zurückgesetzt wird. Über seinen Q-Ausgang gibt es, wenn es gesetzt ist, an, daß die Vorrichung synchron läuft.

Diese Information kann für Alarmierungszwecke genutzt werden.

Über seinen $\overline{Q}$-Ausgang ist das RS-Flip-Flop 35 mit den UND-Gattern 32, 31 verbunden. Dieses hat 4 Eingänge, davon einen invertierenden, der mit dem zweiten Ausgang des Zählers 33 verbunden ist. Das UND-Gatter 31 gibt an seinem Ausgang nur dann ein "1"-Signal ab, das den Rahmenzähler 4 auf Null setzt, wenn vier Bedingungen erfüllt sind:

1. Die Schaltung 2 hat das Rahmenkennungswort erkannt, und am ersten nicht-invertierenden Eingang des UND-GatterS 31 liegt daher das Signal "1" an.

2. Der Zähler 33, der noch nicht gezählt hat, befindet sich noch im Zustand "0", das "0"-Signal von seinem zweiten Ausgang wird dem invertierenden Eingang des UND-Gatters 31 zugeführt.

3. Das RS-Flip-Flop 35 ist noch nicht gesetzt worden, an seinem $\overline{Q}$-Ausgang liegt daher ein "1"-Signal an, das dem zweiten nicht-invertierenden Eingang des UND-GatterS 31 zugeführt wird.

4. Das Signal S2, dargestellt in Fig. 2, verhindert das Synchronisieren des Rahmenzählers 3 nur dann, wenn dieser bereits synchron zum Pulsrahmen des Zeitmultiplexsignals zählt; das Signal S2 ist daher stets "1" bis auf den Zeitpunkt, zu dem das Signal "Rahmenkennungswort erkannt", das von der Schaltung 2 abgegeben wird, koinzidiert mit dem Zeitpunkt, zu dem das Signal S2 den "0"-Zustand annimmt. Das Signal S2 wird dem dritten nicht-invertierenden Eingang des UND-Gatters 31 zugeführt.

Das UND-Gatter 32 hat drei Eingänge, davon einen nicht-invertierenden. Es taktet durch ein "1"-Signal den Teiler 17, solange drei Bedingungen erfüllt sind.

1. An seinem nicht-invertierenden Eingang liegt das Signal "1" vom $\overline{Q}$-Ausgang des RS-Flip-Flops 35 an.

2. Am ersten, invertierenden Eingang liegt während der Dauer eines Rahmens zu einem bestimmten Zeitpunkt ein "0"-Zustand vom Signal S1 vor.

3. Ein zweiter, invertierender Eingang ist ebenfalls mit dem zweiten Ausgang des Zählers 34 verbunden, der, solange er noch nicht gezählt hat, ein "0"-Signal ausgibt.

Ein Rahmenkennungswort muß dreimal hintereinander gefunden worden sein, damit - gemäß den CCITT-Empfehlungen - der Rahmensynchronismus als erreicht gilt, der dann als verloren gilt, wenn viermal

5

hintereinander ein Rahmenkennungswort nicht erkannt worden ist.

Eine erfindungsgemäße Synchronisierschaltung muß allgemein nur das Kriterium erfüllen, daß sie bei Erreichen des Synchronismus einerseits den Rahmenzähler 3 auf Null setzt und Taktimpulse des Rahmenzählers an den Teiler 17 unterdrückt. Dazu sind auch andere Verbindungen von Gattern, Zählern und Flip-Flops geeignet.

Da das RS-Flip-Flop 35 zum Zeitpunkt der Betriebsaufnahme des Synchronisierers möglicherweise einen undefinierten Zustand aufweist, kann man es auch durch einen JK-Flip-Flop ersetzen.

Je nach Anzahl der hintereinander geschalteten Schaltungen kann es innerhalb der in Fig. 1 gezeigten Anordnung zu Laufzeitverzögerungen kommen, die durch Einsetzen von verzögernden Bauelementen an anderen Stellen ausgeglichen werden können.

Vorhergehend wurde eine erfindungsgemäße Anordnung für Digitalsignale beschrieben, die durch bitweises Auflösen eines Zeitmultiplex-Digitalsignals entstanden sind.

In einer erfindungsgemäßen Anwendung für Digitalsignale, die durch wortweises Auflösen eines Zeitmultiplex-Digitalsignals entstanden sind, muß je nach Art und Dauer des Rahmenkennungswortes unter Umständen die Schaltung 2 modifiziert werden.

## Ansprüche

1. Verfahren zum Zuordnen von Digitalsignalen auf parallele Empfangskanäle (E1-E4) eines Übertragungssystems in einer Schaltungsanordnung, die einem Demultiplexer nachgeschaltet ist, der die Digitalsignale durch Auflösung eines Zeitmultiplex-Digitalsignals bereitstellt und der sie auf parallelen Kanälen (K1-K4) sowie ein Taktsignal der Schaltungsanordnung zuführt, mit einem Kanalverteiler (1), einer Schaltung (2) zur Erkennung des Rahmenkennungswortes und einem Rahmenzähler (4),
**dadurch gekennzeichnet,**
- daß mindestens eines der Digitalsignale in dem Kanalverteiler (1) mittels eines Registers (15) verzögert wird,
- daß die Digitalsignale mittels zyklisch arbeitender Wählschalter (11-14) in Zeitabständen von vorzugsweise zwei Pulsrahmen, so lange auf den Empfangskanälen (E1-E4) vertauscht werden, bis in der Schaltung (2) das Rahmenkennungswort erkannt wird,
- daß dann ein Synchronisierer (3) den Rahmenzähler (4) auf den Pulsrahmen des Demultiplexers synchronisiert und
- daß gleichzeitig das zyklische Vertauschen beendet wird.
2. Verfahren nach Anspruch 1,
dadurch gekennzeichnet,
daß die Digitalsignale durch bitweises Auflösen des Zeitmultiplex-Digitalsignals von dem Demultiplexer bereitgestellt werden.
3. Verfahren nach Anspruch 1,
dadurch gekennzeichnet,
daß die Digitalsignale durch wortweises Auflösen des Zeitmultiplex-Digitalsignals von dem Demultiplexer bereitgestellt werden.

FIG.1

EP 0 384 207 A2

Rahmendauer

S1

S2

S3

FIG.2